# EUROPEAN PATENT SPECIFICATION

(11) **EP 1 331 230 B1**
(45) Date of publication and mention of the grant of the patent: **20.10.2010**
(21) Application number: 02250963.2
(22) Date of filing: 12.02.2002
(51) Int. Cl.: C08F 4/6592, C08F 210/02

(54) **Catalyst composition for preparing olefin polymers**
Katalysatorzusammensetzung für die Herstellung von Polyolefinen
Composition catalytique pour la préparation de polyoléfines

(30) Priority: 28.01.2002 US 56026
(43) Date of publication of application: 30.07.2003
(73) Proprietor: INDUSTRIAL TECHNOLOGY RESEARCH INSTITUTE, Chutung, Hsinchu (TW)
(72) Inventor: Tsai, Jing-Cheng, Kaohsiung City (TW); Wu, Ming-Yuan, Nantou Hsien (TW); Hsieh, Tung-Ying, Chung-Ho City, Taipei (TW); Wei, Yuh-Yuan, Pao-Shan Hsiang, Hsinchu Hsien (TW)
(74) Representative: Nash, David Allan

(56) References cited:
- EP-A- 0 316 155
- EP-A- 0 610 843
- EP-A- 0 955 305
- EP-A- 1 179 554
- WO-A-00/68279
- DE-A- 10 036 692
- US-A- 5 087 677
- US-A- 6 020 444
- DATABASE WPI Derwent Publications Ltd., London, GB; AN 2002-438358 XP002239351 -& JP 2002 030109 A (ZH KOGYO GIJUTSU KENKYUHIN), 31 January 2002 (2002-01-31)
- DATABASE CA [Online] CHEMICAL ABSTRACTS SERVICE, COLUMBUS, OHIO, US; CAI, JINGCHENG ET AL: "Spiro cyclic-bridged metallocene catalysts for production of cycloolefin copolymers having high cycloolefin conversion and glass transition temperature" retrieved from STN Database accession no. 138:153944 XP002239350 & CN 1 339 507 A (INDUSTRIAL TECHNOLOGY INST., PEOP. REP. CHINA) 13 March 2002 (2002-03-13)

## Description

### 1. Field of the Invention:

The present invention relates to a catalyst composition for preparing olefin polymers, and more particularly to a catalyst composition for preparing cycloolefin copolymers with a high cycloolefin conversion and a high glass transition temperature. The catalyst composition can still maintain relatively high activity at high temperature reaction conditions.

### 2. Description of the Prior Art:

Olefin-based polymers have been used in a wide range of applications. One group of commonly used olefin-based polymers is polyolefins, that is, homopolymers or copolymers of olefins. These polyolefin polymers are typically used in such applications as blow and injection molding, extrusion coating, film and sheeting, pipe, wire and cable.

An example of polyolefin is ethylene-propylene elastomer (ethylene-propylene rubbers, EPR). It has many end-use applications due to its resistance to weather, good heat aging properties and its ability to be compounded with large quantities of fillers and plasticizers. Typical automotive uses are radiator and heater hoses, vacuum tubing, weather stripping and sponge doorseals. Typical industrial uses are sponge parts, gaskets and seals.

Another group of commonly used olefin-based polymers is cycloolefin copolymers (COC). One of the examples is a copolymer of cycloolefin and ethylene, which has an extraordinarily high glass transition temperature compared with traditional polyolefins owing to its incorporation of cyclic monomers. Also, the polymer has high transparency in physical properties due to reduced crystallinity by the incorporation of cyclic monomers. The combination of light transparency, heat resistance, aging resistance, chemical resistance, solvent resistance, and low dielectric constant makes COC a valuable material that has attracted research activities in both academic and industrial sectors. Currently, ethylene/cycloolefin copolymers have been demonstrated to be a suitable material in the field of optical materials such as optical memory disks and optical fibers.

Ethylene/cycloolefin copolymers are usually prepared in the presence of metallocene/aluminoxane catalyst systems, as described in U.S. Patent No. 5,559,199 (Abe et al.) and No. 5,602,219 (Aulbach et al.) In U.S. Patent No. 5,559,199, metallocenes such as isopropylidene (cyclopentadienylmethylcyclopentadienyl)zirconium dichloride are disclosed. In U.S. Patent No. 5,602,219, metallocenes such as dimethylsilyl-(1-indenyl)-cyclopentadienylzirconium dichloride are disclosed.

EP 1179554 discloses metallocenes such as cyclobutylidene (1-methyl-cyclopentadienyl)-(1-indenyl) bis (dimethylamino) zirconium and some other metallocenes in its claims.

EP 955305 discloses metallocenes such as cyclopropylidene (cyclopentadienyl, X2,7-di-tert-butyl-fluorenyl) zirconium dichlorides.

However, conventional processes for preparing ethylene-cycloolefin copolymers have some common problems. First, the conversion of the cycloolefin (or the incorporation of the cycloolefin) is too low. Second, the high incorporation of ethylene results in too low a glass transition temperature (Tg) of the copolymer.

To increase the conversion of the cycloolefin, a common technique is to increase the reaction temperature or reducing reaction pressure of ethylene. However, using this technique, the reactivity for the production of cycloolefin polymer will be reduced as the examples show in U.S. patent 5,602,219 and 5,559,199. Obviously, this technique will reduce the commercial feasibility for COC polymerization. Therefore, efforts to enhance the reactivity of catalyst for increasing the incorporation of cyclic olefins during the COC polymerization processes are highly desirable in the industrial applications.

### SUMMARY OF THE INVENTION

An object of the present invention is to provide a catalyst composition for preparing olefin polymers, particularly for preparing ethylene/cycloolefin copolymers with high cycloolefin incorporation and a high Tg.

To achieve the above-mentioned object, the catalyst composition of the present invention for preparing an olefin polymer includes (a) a metallocene compound represented by formula (Ia) and (b) an activating cocatalyst.

Formula (Ia) has the structure 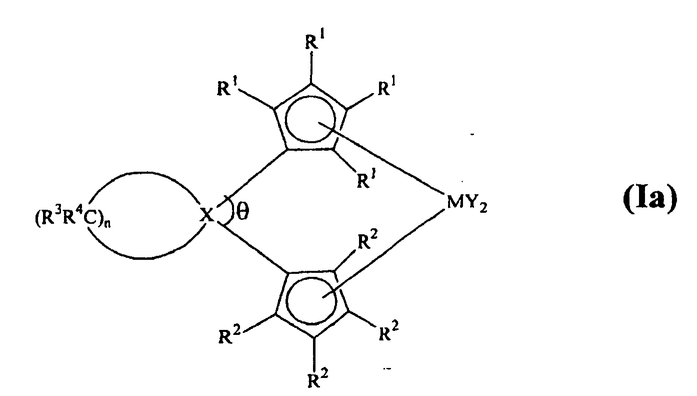 wherein
R¹ can be the same or different and is hydrogen, halogen, an alkyl, alkenyl, aryl, alkylaryl or arylalkyl group having from 1 to 20 carbon atoms, or two adjacent R¹ groups can link together with the carbon atoms to which they are attached to form an indenyl or tetrahydroindenyl group;
R² can be the same or different and has the same definition as R¹;
X is carbon, germanium or tin;
n is 2;
R³ and R⁴ can be the same or different and are hydrogen, halogen, an alkyl, alkenyl, aryl, alkylaryl or arylalkyl group having from 1 to 12 carbon atoms;
M is a Group IVB transition metal with an oxidation state of +4;
Y is the same or different and is independently an anionic ligand with a -1 valence; and
the angle θ formed by the two cyclopentadienyl rings and X is equal to or greater than 100 degrees.

Alternatively, the composition for preparing an olefin polymer includes (a) a metallocene compound represented by formula (Ib) and (b) an activating cocatalyst.

Formula (Ib) has the structure 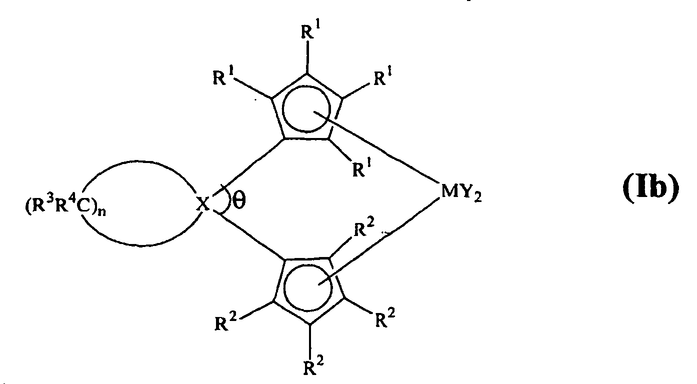 wherein
R¹ can be the same or different and is hydrogen, halogen, an alkyl, alkenyl, aryl, alkylaryl or arylalkyl group having from 1 to 20 carbon atoms, or two adjacent R¹ groups can link together with the carbon atoms to which they are attached to form an indenyl or tetrahydroindenyl group;
R² can be the same or different and has the same definition as R¹;
X is carbon, germanium or tin;
n is 3;
R³ and R⁴ can be the same or different and are hydrogen, halogen, an alkyl, alkenyl, aryl, alkylaryl or arylalkyl group having from 1 to 12 carbon atoms;
M is a Group IVB transition metal with an oxidation state of +4;
Y is the same or different and is independently an anionic ligand with a -1 valence; and
the angle θ formed by the two cyclopentadienyl rings and X is equal to or greater than 100 degrees.

In this composition where n is 3, the metallocene compound is preferably the compound cyclobutylidene(1-η⁵-methylcyclopentadienyl) (1-η⁵-indenyl)bis(dimethylamino) zirconium or cyclobutylidene(1-η⁵-cyclopentadienyl) (1-η⁵-indenyl)bis(dimethylamino)zirconium, nor a metallocene compound of the formula: 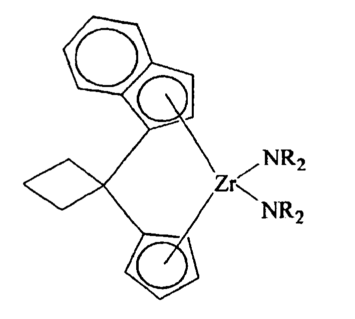 wherein R is a C₁-C₂₀ hydrocarbyl group,
or 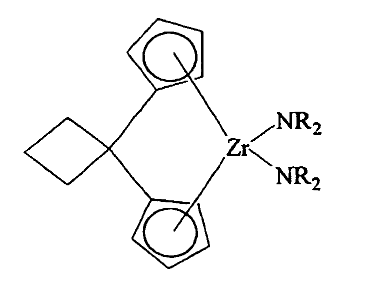 wherein R is a C₁-C₂₀ hydrocarbyl group.

The activating cocatalyst can be (1) an aluminoxane, (2) a mixture of AlR¹¹R¹²R¹³ and a borate, or (3) a mixture of AlR¹¹R¹²R¹³ and an aluminoxane, wherein R¹¹, R¹², and R¹³ are a C₁₋₂₀ aliphatic group or a C₆₋₁₀ aromatic group.

The catalyst composition of the present invention can be used to prepare an olefin polymer. Using the catalyst composition to prepare a cycloolefin copolymer, the cycloolefin incorporation is increased, and the copolymer obtained has a high glass transition temperature ranging from 60°C-350°C.

### BRIEF DESCRIPTION OF THE DRAWINGS

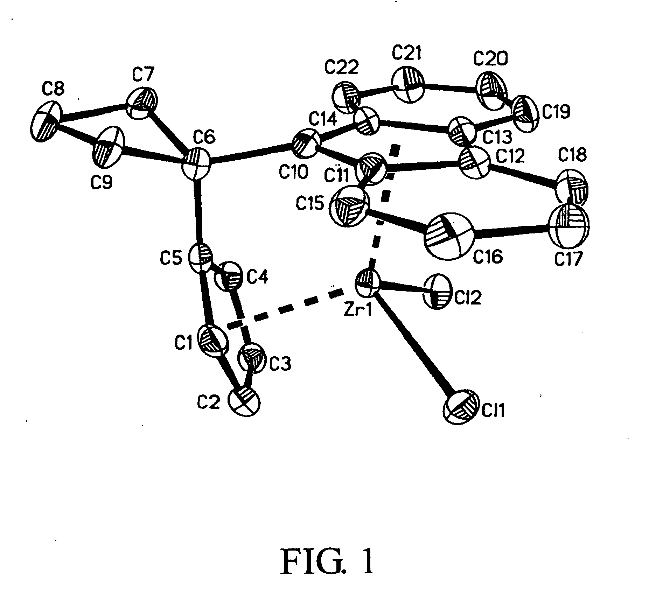

FIG. 1 is an X-ray crystal structure of the metallocene compound prepared from Example 5 of the present invention.

### DETAILED DESCRIPTION OF THE INVENTION

The present invention provides a catalyst composition for preparing olefin polymers, which includes a metallocene compound represented by formula (I) and an activating cocatalyst.

One aspect of the present invention resides in that X (Group IVA element such as C) in formula (I) is bridged by -(CR³R⁴)ₙ- to form a ring structure, wherein n is 2 or 3.

Referring to the conventional metallocenes for preparing cycloolefin copolymers in U.S. Patent No. 5,559,199 (U.S. '199) and No. 5,602,219 (U.S. '219) as mentioned above, for example, isopropylidene(cyclopentadienylfluorenyl)zirconium dichloride and dimethylsilyl-(1-indenyl)cyclopentadienylzirconium dichloride, it can be seen that two methyl groups are bonded to the carbon or silicon atom of the metallocene. Part of the chemical structure of the metallocene is depicted in the Table 1 for better understanding, in which Cp indicates unsubstituted or substituted cyclopentadienyl, and θ*₁*, θ*₂*, and θ*₃*, indicate the angle formed by Cp, Group IVA element, and another Cp (Cp-IVA-Cp), which is called the bite angle.

**Table 1**

| | | |
|---|---|---|
| U.S. '199 (bite angle's X-ray data, see Journal of Organometallic Chemistry 1995, 497, 105). | U.S. '219 (bite angle's X-ray data, see Organometallics 1994, 13, 964 and Journal of Organometallic Chemistry 1989, 369, 359). | Present invention (bite angle, see FIG. 1 and Table 2) *vide infra* |
| 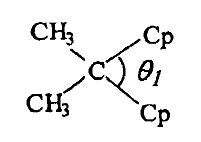 | 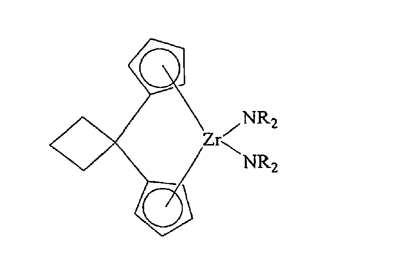 | 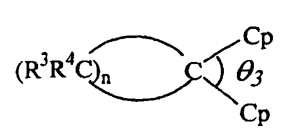 |
| θ*₁*=98.4° | θ*₂*=94.3∼94.8° | θ*₃*=100.8° |

In contrast with the metallocene of U.S '199 and U.S. '219, the Group IVA element such as carbon is bridged by -(CR³R⁴)ₙ- (n=2 or 3) to form a ring structure in the present invention. As a result of this bridging, the angle formed by Cp-IVA-Cp can be enlarged. That is to say, angle θ*₃* is larger than both θ*₁* and θ*₂*. It should be noted that to date, metallocene catalysts containing a bite angle larger than 100 degrees have never been reported from prior art.

When a conventional metallocene compound is used as a catalyst to prepare a copolymer of a cycloolefin and an acyclic olefin (such as ethylene), since the bite angle is small, it is difficult for the cycloolefin that has a larger size than ethylene to approach the metallocene's active site. Thus, an undesired low incorporation amount of the cycloolefin occurs in the copolymer produced. However, when the metallocene compound of the present invention is used as the catalyst, the larger bite angle leads to a greater vacancy around the metallocene's active site. Thereby the larger sized cycloolefin has greater probability to approach the reactive site. Consequently, copolymers produced using the catalyst composition of the present invention tend to have a higher cycloolefin incorporation in the polymer backbone, thus significantly increasing their glass transition temperatures (Tg).

The scientific basis is explained as follows. In a bridged metallocene of the present invention, when the bite angle between two Cp rings opens up, the active center of the metal moves outward. This will substantially increase the ratio of the coordination speed of a cycloolefin to acyclic olefin monomer with the active center of the catalyst compared with other catalysts, which increases the ratio of the cycloolefin relative to acyclic olefin monomer incorporated in the resulting copolymer in turn. The Tg of the copolymer increases accordingly, and the polymerization activity also increases. It should be noted that in a bridged metallocene catalyst, the bite angle resulting from a carbon bridge is obviously larger than that from a silicon bridge. One reason is that the element radius of carbon (0.77 Å) (1Å = 10⁻¹⁰ m) smaller smaller than that of silicon (1.11 Å). The other reason is that the electronegativity of carbon (2.5) is larger than that of silicon (1.8), thus carbon-carbon has a far larger bonding energy than silicon-carbon. Therefore, when Cp is bridged with a group IVA element, the silicon bridge has a larger degree of deformation than carbon, resulting in a smaller bite angle.

In formula (I), when R¹ and R² are an alkyl, alkenyl, aryl, alkylaryl or arylalkyl group having from 1 to 20 carbon atoms, preferably from 1 to 15 carbon atoms, they are preferably C₁₋₁₀ alkyl, C₁₋₁₀ alkenyl, C₆₋₁₀ aryl, C₇₋₁₀ alkylaryl, and C₇₋₁₀ arylalkyl. Representative examples of R¹ and R² include H, methyl, ethyl, propyl, butyl, isobutyl, amyl, isoamyl, hexyl, 2-ethylhexyl, heptyl, octyl, vinyl, allyl, isopropenyl, phenyl, and tolyl.

When two adjacent R¹ (or R²) groups link together with the carbon atoms to which they are attached, R¹ (or R²) can form with the cyclopentadienyl moiety to which they are attached a saturated or unsaturated polycyclic cyclopentadienyl ring such as an indenyl, or tetrahydroindenyl group. Representative examples of such rings include η⁵-cyclopentadienyl, η⁵-methylcyclopentadienyl, η⁵-ethylcyclopentadienyl, η⁵-propylcyclopentadienyl, η⁵-tetramethylcyclopentadienyl, η⁵-pentamethylcyclopentadienyl, η⁵-*n*-butylcyclopentadienyl, indenyl, and tetrahydroindenyl.

Y can be H, a C₁₋₂₀ hydrocarbon group, a halogen, C₆₋₂₀ aryl, C₇₋₂₀ alkylaryl or arylalkyl, C₁₋₂₀ alkoxy, C₁₋₂₀ aryloxy, NH₂, NHR⁷, NR⁷R⁸, -(C=O)NH₂, -(C=O) NHR⁹, -(C=O)NR⁹R¹⁰, each of R⁷, R⁸, R⁹ and R¹⁰ being C₁₋₂₀ hydrocarbyl. Suitable Y groups include methyl, ethyl, phenyl, chlorine, bromine, methoxy, ethoxy, -NH₂, - NH(CH₃), -N(CH₃)₂, -N(C₂H₅)₂, and -N(C₃H₇)₂.

In the present invention, the metallocene compound represented by formula (I) can be combined with an activating cocatalyst to form a catalyst composition, which can be used for preparing olefin polymers.

The cocatalyst used in the present invention can be (1) an aluminoxane, (2) a mixture of AlR¹¹R¹²R¹³ and a borate, or (3) a mixture of AlR¹¹R¹²R¹³ and an alumoxane. R¹¹ , R¹², and R¹³ are a C₁₋₂₀ aliphatic group or a C₆₋₁₀ aromatic group. A preferred aluminoxane is methyl aluminoxane. Representative examples of AlR¹¹R¹²R¹³ include trimethyl aluminum, triethyl aluminum, tripropyl aluminum, trisopropyl aluminum, tributyl aluminum, and triisobutyl aluminum (TIBA). Representative examples of borates include N,N-dimethyl anilinium tetrakis(pentafluorophenyl)borate, triphenyl carbenium tetrakis(pentafluorophenyl)borate, trimethyl ammonium tetrakis(pentafluorophenyl)borate, ferrocenium tetrakis(pentafluorophenyl)borate, dimethyl ferrocenium tetrakis(pentafluorophenyl)borate, and silver tetrakis(pentafluorophenyl)borate.

Using the catalyst composition of the present invention, an olefin polymer can be synthesized. In the presence of a catalytically effective amount of the catalyst composition of the present invention under polymerizing conditions, an olefin monomer can be subjected to polymerization (homopolymerization), or at least one olefin monomer together with at least one other monomer can be subjected to polymerization (copolymerization).

According to the present invention, a preferred olefin is a cycloolefin. Preferably, the polymerization of the present invention is homopolymerization of a cycloolefin, or copolymerization of a cycloolefin and an acycloolefin.

Cycloolefins suitable for use in the present invention include a bicycloheptene, a tricyclodecene, a tricycloundecene, a tetracyclododecene, a pentacyclopentadecene, a pentacyclopentadecadiene, a pentacyclohexadecene, a hexacycloheptadecene, a heptacycloeicosene, a heptacycloheneicosene, an octacyclodocosene, a nonacyclopentacosene, and a nonacyclohexacosene. Representative examples include norbornene, tetracyclododecene, dicyclopentadiene, and ethylidene norbornene.

Suitable acyclic olefins can be ethylene or α-olefins. Representative examples of α-olefins include those olefins having 3 to 12 carbon atoms, such as propylene, 1-butene, 1-pentene, 1-hexene, and 1-octene.

More particularly, the catalyst composition of the present invention can be advantageously used to prepare acylic olefin/cycloolefin copolymers, such as ethylene/cycloolefin copolymers. By means of the specific catalyst composition, the ethylene/cycloolefin copolymer obtained will have a high cycloolefin conversion and a high Tg.

By means of the specific catalyst composition of the present invention, the resulting olefin polymer has a glass transition temperature ranging from 60-350°C, preferably 120-350°C, most preferably 250-350°C.

The catalyst composition disclosed in the present invention can be used in slurry reactions, gas phase reactions, and solution polymerization reactions. According to the experimental results of the present invention, it can be proved that the specific catalyst composition of the present invention can still have superior activity at a higher reaction temperature. Such superior activity will lead to the increase of the cycloolefin incorporation amount, and the cycloolefin copolymer obtained will have an increased Tg, which can not be achieved by a conventional similar catalyst.

According to the present invention, representative examples of the metallocene compound of formula (I) include the following five formulae: 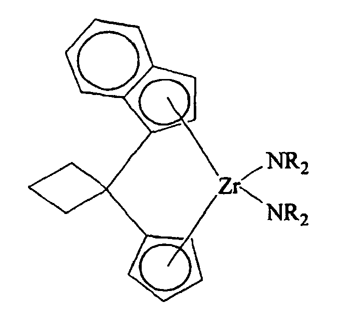 wherein R is a C₁-C₂₀ hydrocarbyl group, 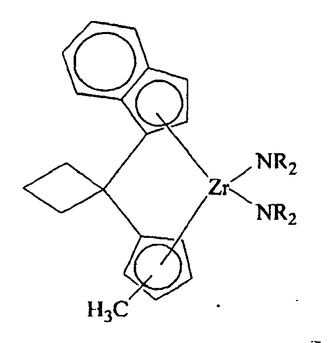 wherein R is a C₁-C₂₀ hydrocarbyl group,
and 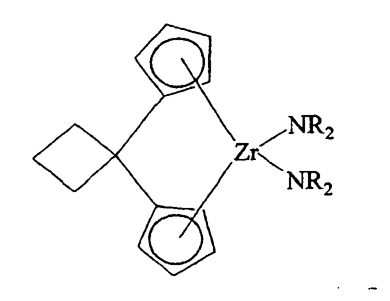 wherein R is a C₁-C₂₀ hydrocarbyl group.

The following examples are intended to illustrate the process and the advantages of the present invention. Unless otherwise indicated, all parts, percents, ratios are by weight.

### Synthesis of Metallocene

### Example 1:

### Synthesis of 1-cyclopentadienyl-1-indenylcyclobutane (a bridged cyclopentadiene)

Indene (5.8 g, 50 mmole) was placed in a 250 ml round bottom flask with 50 ml of THF (tetrahydrofuran). 40 ml (1.6 M, 64 mmole) of n-butyl lithium (n-BuLi) was added into the solution under an ice bath. The mixture turned orange red. The ice bath was removed and the mixture was stirred for 3 hours. Then, the reaction mixture was stripped under vacuum to remove solvent, washed with 50 ml of pentane to remove excess n-BuLi, and filtered to collect the precipitate.

The precipitate was dissolved in 50 ml of THF and 6,6-trimethylenefulvene (5.9 g, 50 mmole) was added gradually to the solution under an ice bath. After stirring for 24 hours, 1 ml of water was added to the mixture to terminate the reaction. The reaction mixture was stripped under vacuum to remove solvent, dissolved with 100 ml of hexane, and filtered to collect the filtrate. The crude product (i.e., filtrate) was purified by column chromatography (the packing was 20 g of silica gel, the eluent was 100% hexane). The solution was then concentrated under reduced pressure to obtain a pale yellow liquid (8.2 g, yield=70%).

### Example 2:

### Synthesis of 1-methylcyclopentadienyl-l-indenylcyclobutane

Indene (2.9 g, 25 mmole) was placed in a 250 ml round bottom flask with 30 ml of THF (tetrahydrofuran). 20 ml (1.6 M, 32 mmole) of n-butyl lithium (n-BuLi) was added into the solution under an ice bath. The mixture turned orange red. The ice bath was removed and the mixture was stirred for 3 hours. Then, the reaction mixture was stripped under vacuum to remove solvent, washed with 50 ml of pentane to remove excess n-BuLi, and filtered to collect the precipitate.

The precipitate was dissolved in 30 ml of THF and 3-methyl-6,6-trimethylenefulvene (3.3 g, 25 mmole) was added gradually to the solution under an ice bath. After stirring for 24 hours, 1 ml of water was added to the mixture to terminate the reaction. The reaction mixture was stripped under vacuum to remove solvent, dissolved with 50 ml of hexane, and filtered to collect the filtrate. The crude product (i.e., filtrate) was purified by column chromatography (the packing was 20 g of silica gel, the eluent was 100% hexane). The solution was then concentrated under reduced pressure to obtain a pale yellow liquid (4.7 g, yield=75.8%).

### Example 3:

### Synthesis of cyclobutylidene(1-η⁵-cyclopentadienyl) (1-η⁵-indenyl)bis(dimethylamino)zirconium

1-Cyclopentadienyl-1-indenylcyclobutane (0.94 g, 4 mmole) obtained as in Example 1 and Zr(NMe₂)₄ (1 g, 3.7 mmole) were placed in a 100 ml round bottle flask. 20 ml of toluene was added to the flask and the mixture was allowed to react at room temperature for 15 hours. The reaction mixture was stripped under vacuum to remove solvent and then 50 ml of pentane was added to dissolve the residue. The solution was filtered and the filtrate was then concentrated to obtain a yellow solid (1.45 g, yield=95%).

### Example 4:

### Synthesis of cyclobutylidene(1-η⁵-methylcyclopentadienyl) (1-η⁵-indenyl)bis(dimethylamino)zirconium

1-Methylcyclopentadienyl-1-indenylcyclobutane (0.99 g, 4 mmole) obtained as in Example 2 and Zr(NMe₂)₄ (1 g, 3.7 mmole) were placed in a 100 ml round bottle flask. 20 ml of toluene was added to the flask and the mixture was allowed to react at room temperature for 15 hours. The reaction mixture was stripped under vacuum to remove solvent and then 50 ml of pentane was added to dissolve the residue. The solution was filtered and the filtrate was then concentrated to obtain a yellow solid (1.54 g, yield=98%).

### Reference Example 5:

### Synthesis of cyclobutylidene(1-η⁵-cyclopentadienyl) (1-η⁵-fluorenyl)zirconium dichloride

1-cyclopentadienyl-1-fluorenylcyclobutane was prepared by similar procedures as described in Example 1. The resulting substance (1.14 g, 4 mmole) was combined in toluene with Zr(NMe₂)₄ (1 g, 3.7 mmole) within a 100 ml round bottle flask. 20 ml of toluene was added to the flask and the mixture was allowed to react at room temperature for 15 hours for providing the metallocene amide complex. The resulting solution was then treated with 1.05 ml of trimethylsilylchloride. The resulting solution was then allowed to react at room temperature for 6 hr to provide a yellow precipitate of cyclobutylidene(1-η⁵-cyclopentadienyl) (1-η⁵-fluorenyl)zirconium dichloride (1.15 g, 62% yield).

The precipitating powder of the catalyst was then recrystallized over toluene to form an X-ray quality single crystalline catalyst. X-ray crystal data and structural refinement were recorded by a Nonius Kappa ccd diffractometer at 295 K. Crystal data and structure refinement for the product cyclobutylidene(1-η⁵-cyclopentadienyl) (1-η⁵-fluorenyl)zirconium dichloride (labeled to IC 8359) is shown in Table 2 attached. Selected bond lengths and bond angles are listed in Table 3 attached. X-ray crystal structure is shown in FIG. 1. The results clearly indicate that a catalyst with exceptional large bite angle was obtained in the system.

**Table 2. Crystal data and structure refinement for IC8359.**

| | |
|---|---|
| Identification code | ic8359 |
| Diffractometer used | Nonius KappaCCD |
| Empirical formula | C₂₂H₁₈Cl₂Zr |
| Formula weight | 444.48 |
| Temperature | 295(2) K |
| Wavelength | 0.71073 A |
| Crystal system | Monoclinic |
| Space group | P2₁/C |
| Unit cell dimensions | a = 9.49350(10) Å alpha = 900 |
| | b = 21.3760(3) Å beta = 104.2460(10)° |
| | c=9.34090(10) Å gamma =900 |
| Volume, Z | 1837.28(4) Å³, 4 |
| Density (calculated) | 1.607 Mg/m³ |
| Absorption coefficient | 0.890 mm⁻¹ |
| F(000) | 896 |
| Crystal size | 0.30 x 0.25 x 0.25 mm |
| θrange for data collection | 2.21 to 25.00° |
| Limiting indices | -12□h□12, -27□k□27, -12□*l*□12 |
| Reflections collected | 11705 |
| Independent reflections | 3235 (Rᵢₙₜ = 0.0225) int |
| Absorption correction | Multi-scan |
| Max. and min. transmission | 0.915 and 0.865 |
| Refinement method | Full-matrix least-squares on F² |
| Data / restraints / parameters | 3192 / 0 / 227 |
| Goodness-of-fit on F² | 1.352 |
| Final R indices [I>2σ(I)] | R1 = 0.0364, wR2 = 0.1053 |
| R indices (all data) | R1 = 0.0421, wR2 = 0.1206 |
| Extinction coefficient | 0.032(2) |
| Largest diff. peak and hole | 0.808 and -0.774 e Å⁻³ |

**Table 3. Bond lengths [Å] and angles [°]for 8359.**

| | | | |
|---|---|---|---|
| Zr(1)-C(10) | 2.414(3) | Zr(1)-Cl(1) | 2.4204(9) |
| Zr(1)-C1(2) | 2.4274(9) | Zr(1)-C(5) | 2.439(3) |
| Zr(1)-C(1) | 2.446(3) | Zr(1)-C(4) | 2.460(3) |
| Zr(1)-C(14) | 2.519(3) | Zr(1)-C(11) | 2.523(3) |
| Zr(1)-C(2) | 2.535(3) | Zr(1)-C(3) | 2.545(3) |
| Zr(1)-C(12) | 2.650(3) | Zr(1)-C(13) | 2.652(3) |
| C(1)-C(2) | 1.403(5) | C(1)-C(5) | 1.420(5) |
| C(2)-C(3) | 1.387(5) | C(3)-C(4) | 1.414(5) |
| C(4)-C(5) | 1.415(5) | C(S)-C(6) | 1.521(5) |
| C(6)-C(10) | 1.526(5) | C(6)-C(7) | 1.547(5) |
| C(6)-C(9) | 1.548(5) | C(7)-C(8) | 1.549(5) |
| C(8)-C(9) | 1.537(5) | C(10)-C(11) | 1.435(5) |
| C(10)-C(14) | 1.438(5) | C(11)-C(15) | 1.423(5) |
| C(11)-C(12) | 1.442(5) | C(12)-C(18) | 1.419(5) |
| C(12)-C(13) | 1.433(5) | C(13)-C(19) | 1.412(5) |
| C(13)-C(14) | 1.439(5) | C(14)-C(22) | 1.413(5) |
| C(15)-C(16) | 1.367(5) | C(16)-C(17) | 1.408(6) |
| C(17)-C(18) | 1.360(5) | C(19)-C(20) | 1.368(6) |
| C(20)-C(21) | 1.402(6) | C(21)-C(22) | 1.373(6) |
| C(10)-Zr(1)-Cl(1) | 125.58(8) | C(10)-Zr(1)-Cl(2) | 126.19(8) |
| Cl(1)-Zr(1)-Cl(2) | 96.90(3) | C(10)-Zr(1)-C(5) | 57.87(11) |
| Cl(1)-Zr(1)-C(5) | 124.92(8) | Cl(2)-Zr(1)-C(5) | 125.23(8) |
| C(10)-Zr(1)-C(1) | 78.75(11) | Cl(1)-Zr(1)-C(1) | 91.40(9) |
| Cl(2)-Zr(1)-C(1) | 137.27(9) | C(5)-Zr(1)-C(1) | 33.79(12) |
| C(10)-Zr(1)-C(4) | 79.97(11) | Cl(1)-Zr(1)-C(4) | 135.49(9) |
| Cl(2)-Zr(1)-C(4) | 92.13(8) | C(5)-Zr(1)-C(4) | 33.57(11) |
| C(1)-Zr(1)-C(4) | 55.18(12) | C(10)-Zr(1)-C(14) | 33.81(11) |
| Cl(1)-Zr(1)-C(14) | 136.92(8) | Cl(2)-Zr(1)-C(14) | 92.92(8) |
| C(5)-Zr(1)-C(14) | 79.91(11) | C(1)-Zr(1)-C(14) | 109.01(12) |
| C(4)-Zr(1)-C(14) | 85.60(11) | C(10)-Zr(1)-C(11) | 33.71(11) |
| Cl(1)-Zr(1)-C(11) | 92.45(8) | Cl(2)-Zr(1)-C(11) | 137.19(8) |
| C(5)-Zr(1)-C(11) | 79.89(11) | C(1)-Zr(1)-C(11) | 83.81(11) |
| C(4)-Zr(1)-C(11) | 109.73(11) | C(14)-Zr(1)-C(11) | 54.49(11) |
| C(10)-Zr(1)-C(2) | 109.70(12) | C1(1)-Zr(1)-C(2) | 81.97(9) |
| Cl(2)-Zr(1)-C(2) | 107.34(9) | C(5)-Zr(1)-C(2) | 54.69(12) |
| C(1)-Zr(1)-C(2) | 32.67(12) | C(4)-Zr(1)-C(2) | 53.83(12) |
| C(14)-Zr(1)-C(2) | 134.17(11) | C(11)-Zr(1)-C(2) | 115.33(12) |
| C(10)-Zr(1)-C(3) | 110.63(11) | Cl(1)-Zr(1)-C(3) | 105.31(9) |
| Cl(2)-Zr(1)-C(3) | 83.36(9) | C(5)-Zr(1)-C(3) | 54.84(11) |
| C(1)-Zr(1)-C(3) | 54.10(12) | C(4)-Zr(1)-C(3) | 32.77(12) |
| C(14)-Zr(1)-C(3) | 117.47(12) | C(11)-Zr(1)-C(3) | 133.80(11) |
| C(2)-Zr(1)-C(3) | 31.70(12) | C(10)-Zr(1)-C(12) | 54.80(11) |
| Cl(1)-Zr-(1)-C(12) | 83.86(8) | C1(2)-Zr(1)-C(12) | 107.56(8) |
| C(5)-Zr(1)-C(12) | 110.28(11) | C(1)-Zr(1)-C(12) | 114.99(11) |
| C(4)-Zr(1)-C(12) | 134.13(11) | C(14)-Zr(1)-C(12) | 53.26(11) |
| C(11)-Zr(1)-C(12) | 32.24(10) | C(2)-Zr(1)-C(12) | 143.59(12) |
| C(3)-Zr(1)-C(12) | 165.08(11) | C(10)-Zr(1)-C(13) | 54.77(11) |
| Cl(1)-Zr(1)-C(13) | 107.46(8) | Cl(2)-Zr(1)-C(13) | 84.23(8) |
| C(5)-Zr(1)-C(13) | 110.22(11) | C(1)-Zr(1)-C(13) | 132.66(12) |
| C(4)-Zr(1)-C(13) | 116.80(11) | C(14)-Zr(1)-C(13) | 32.18(11) |
| C(11)-Zr(1)-C(13) | 53.21(11) | C(2)-Zr(1)-C(13) | 164.43(12) |
| C(3)-Zr(1)-C(13) | 146.07(12) | C(12)-Zr(1)-C(13) | 31.37(11) |
| C(2)-C(1)-C(5) | 108.2(3) | C(2)-C(1)-Zc(1) | 77.2(2) |
| C(5)-C(1)-Zr(1) | 72.8(2) | C(3)-C(2)-C(1) | 108.9(3) |
| C(3)-C(2)-Zr(1) | 74.6(2) | C(1)-C(2)-Zr(1) | 70.2(2) |
| C(2)-C(3)-C(4) | 107.7(3) | C(2)-C(3)-Zr(1) | 73.7(2) |
| C(4)-C(3)-Zr(1) | 70.3(2) | C(3)-C(4)-C(5) | 108.6(3) |
| C(3)-C(4)-Zr(1) | 76.9(2) | C(5)-C(4)-Zr(1) | 72.4(2) |
| C(4)-C(5)-C(1) | 106.6(3) | C(4)-C(5)-C(6) | 126.0(3) |
| C(1)-C(5)-C(6) | 123.3(3) | C(4)-C(5)-Zr(1) | 74.0(2) |
| C(1)-C(5)-Zr(1) | 73.4(2) | C(6)-C(5)-Zr(1) | 100.2(2) |
| C(5)-C(6)-C(10) | 100.8(3) | C(5)-C(6)-C(7) | 113.7(3) |
| C(10)-C(6)-C(7) | 120.9(3) | C(5)-C(6)-C(9) | 112.5(3) |
| C(10)-C(6)-C(9) | 121.8(3) | C(7)-C(6)-C(9) | 87.8(3) |
| C(6)-C(7)-C(8) | 87.8(3) | C(9)-C(8)-C(7) | 88.1(3) |
| C(8)-C(9)-C(6) | 88.2(3) | C(11)-C(10)-C(14) | 106.9(3) |
| C(11)-C(10)-C(6) | 126.2(3) | C(14)-C(10)-C(6) | 125.5(3) |
| C(11)-C(10)-Zr(1) | 77.3(2) | C(14)-C(10)-Zr(1) | 77.1(2) |
| C(6)-C(10)-Zr(1) | 101.1(2) | C(15)-C(11)-C(10) | 132.2(3) |
| C(15)-C(11)-C(12) | 118.9(3) | C(10)-C(11)-C(12) | 108.9(3) |
| C(15)-C(11)-Zr(1) | 117.4(2) | C(10)-C(11)-Zr(1) | 69.0(2) |
| C(12)-C(11)-Zr(1) | 78.8(2) | C(18)-C(12)-C(13) | 132.5(3) |
| C(18)-C(12)-C(11) | 119.9(3) | C(13)-C(12)-C(11) | 107.6(3) |
| C(18)-C(12)-Zr(1) | 121.8(2) | C(13)-C(12)-Zr(1) | 74.4(2) |
| C(11)-C(12)-Zr(1) | 69.0(2) | C(19)-C(13)-C(12) | 132.3(3) |
| C(19)-C(13)-C(14) | 119.9(3) | C(12)-C(13)-C(14) | 107.8(3) |
| C(19)-C(13)-Zr(1) | 123.2(3) | C(12)-C(13)-Zr(1) | 74.3(2) |
| C(14)-C(13)-Zr(1) | 68.8(2) | C(22)-C(14)-C(10) | 131.8(3) |
| C(22)-C(14)-C(13) | 119.4(3) | C(10)-C(14)-C(13) | 108.8(3) |
| C(22)-C(14)-Zr(1) | 117.0(3) | C(10)-C(14)-Zr(1) | 69.1(2) |
| C(13)-C(14)-Zr(1) | 79.0(2) | C(16)-C(15)-C(11) | 118.9(3) |
| C(15)-C(16)-C(17) | 121.8(4) | C(18)-C(17)-C(16) | 121.4(3) |
| C(17)-C(18)-C(12) | 119.1(3) | C(20)-C(19)-C(13) | 118.9(4) |
| C(19)-C(20)-C(21) | 121.2(4) | C(22)-C(21)-C(20) | 121.9(4) |
| C(21)-C(22)-C(14) | 118.7(3) | | |

Symmetry transformations used to generate equivalent atoms:

### Polymer Synthesis

### Example A:

### Synthesis of ethylene/norbornene copolymer

Toluene was refluxed in the presence of sodium to remove water to a water content of less than 10 ppm. 500 g of norbornene and 88 g of dry toluene were mixed under nitrogen to obtain an 85 wt% norbornene solution.

A 500 ml reactor vessel was heated to 120°C, evacuated for 1 hour, and then purged with nitrogen gas three or four times to ensure complete removal of moisture and oxygen. Ethylene was introduced into the reactor to replace nitrogen and expelled. The procedure was repeated again. After this, 100 g of the 85 wt% norbornene solution was then charged in the reactor under a nitrogen atmosphere and the solution was stirred at a rate of 250 rpm while 4 ml of 1.49 M MAO (methyl aluminoxane) was injected into the reactor by a syringe.

The reactor temperature was adjusted to 100°C. After the temperature was stabilized, 1 mg of the metallocene complex obtained as in Example 3 was dissolved in 1 ml of toluene in a glove box. Then, 3 ml of MAO was added in the metallocene solution for activation. After five minutes of activation, the metallocene solution was then injected into the reactor to initiate polymerization and the mixture was stirred at a rate of 750 rpm. Finally, ethylene at a pressure of 15 kg/cm² was introduced into the reactor to a saturation level in the solution and the stir rate for the mixture was maintained at 750 rpm. The reaction proceeded for 30 minutes.

After the completion of the polymerization reaction, the reaction solution was poured into an acetone solution to precipitate the product. The product was washed with acetone two or three times, filtered, and dried in vacuum oven at 80°C for 12 hours. The obtained copolymer was 43.2 g. The results for this example are shown in Table 4.

### Examples B to F

The same procedures as described in Example A were repeated to prepare various cycloolefin copolymers except that the reaction temperature, the metallocene amount, and the MAO amount were changed. The metallocene used in Examples A to F was the same. The results obtained are shown in Table 4.

**Table 4**

| Example | Metallocene Complex (mg) | MAO (ml) | Reaction Temperature (°C) | ethylene pressure (kg/cm²) | Yield (g) | Activity (g/gZr·hr) | Tg (°C) |
|---|---|---|---|---|---|---|---|
| A | 1 | 7 | 100 | 15 | 43.2 | 3.9×10⁵ | 173 |
| B | 0.24 | 1.3 | 80 | 15 | 10.9 | 2.07×10⁵ | 163 |
| C | 0.23 | 1.3 | 100 | 15 | 15.3 | 5.90×10⁵ | 176 |
| D. | 0.22 | 1.3 | 120 | 15 | 20.4 | 8.23×10⁵ | 185 |
| E | 0.23 | 1.3 | 140 | 15 | 26.4 | 10.2×10⁵ | 195 |
| F | 0.24 | 1.3 | 155 | 15 | 11.1 | 4.22×10⁵ | 193 |

### Comparative Example G (compared with Example A)

Toluene was refluxed in the presence of sodium to remove water to a water content of less than 10 ppm. 500 g of norbornene and 88 g of dry toluene were mixed under nitrogen to obtain an 85 wt% norbornene solution.

A 500 ml reactor vessel was heated to 120°C, evacuated for 1 hour, and then purged with nitrogen gas three or four times to ensure complete removal of moisture and oxygen. Ethylene was introduced into the reactor to replace nitrogen and expelled. The procedure was repeated again. After this, 100 g of the 85 wt% norbornene solution was then charged in the reactor under a nitrogen atmosphere and the solution was stirred at a rate of 250 rpm while 4 ml of 1.49 M MAO (methyl aluminoxane) was injected into the reactor by a syringe.

The reactor temperature was adjusted to 100°C. After the temperature was stabilized, 1 mg of diphenylmethylidene(cyclopentadienyl)(9-fluorenyl) zirconium dichloride was dissolved in 1 ml of toluene in a glove box. Then, 3 ml of MAO was added in the metallocene solution for activation. After five minutes of activation, the metallocene solution was then injected into the reactor to initiate polymerization and the mixture was stirred at a rate of 750 rpm. Finally, ethylene at a pressure of 15 kg/cm² was introduced into the reactor to a saturation level in the solution and the stir rate for the mixture was maintained at 750 rpm. The reaction proceeded for 30 minutes.

After the completion of the polymerization reaction, the reaction solution was poured into an acetone solution to precipitate the product. The product was washed with acetone two or three times, filtered, and dried in vacuum oven at 80°C for 12 hours. The obtained copolymer was 26.9 g. The results obtained are shown in Table 5.

**Table 5.**

| Example | Reaction Temperature (°C) | Ethylene Pressure (kg/cm²) | MAO (ml) / 100ml 85%Nb | Activity g/gZr·hr | Tg(°C) |
|---|---|---|---|---|---|
| G | 100 | 15 | 7 | 1.60x10⁶ | 154 |
| A | 100 | 15 | 7 | 3.90x10⁶ | 173 |

| | | | | | |
|---|---|---|---|---|---|
| Nb=norbornene | | | | | |

### Examples I to K

The same procedures as described in Example A were repeated to prepare various cycloolefin copolymer having a high Tg except that the reaction temperature was set to 120°C, the reaction time was lengthened to 1 hour, the ethylene pressure was changed, and the amounts of metallocene and MAO were changed. The metallocene used in Examples I to K was the same as that used in Example A. The results obtained are shown in Table 6.

**Table 6**

| Example | Metallocene Complex (mg) | MAO (ml) | Reaction Temperature (°C) | ethylene pressure (kg/cm²) | Yield (g) | Activity (g/gZr.hr) | Tg (°C) |
|---|---|---|---|---|---|---|---|
| I | 1.05 | 1.3 | 120 | 3 | 27.4 | 1.17×10⁵ | 292 |
| J | 0.52 | 1.3 | 120 | 5 | 24.4 | 2.14×10⁵ | 245 |
| K | 0.55 | 1.3 | 120 | 7 | 34.9 | 2.87×10⁵ | 232 |

### Comparative Example L (compared with Example J)

Toluene was refluxed in the presence of sodium to remove water to a water content of less than 10 ppm. 500 g of norbornene and 88 g of dry toluene were mixed under nitrogen to obtain an 85 wt% norbornene solution.

A 500 ml reactor vessel was heated to 120°C, evacuated for 1 hour, and then purged with nitrogen gas three or four times to ensure complete removal of moisture and oxygen. Ethylene was introduced into the reactor to replace nitrogen and expelled. The procedure was repeated again. After this, 100 g of the 85 wt% norbornene solution was then charged in the reactor under a nitrogen atmosphere and the solution was stirred at a rate of 250 rpm while 4 ml of 1.49 M MAO (methyl aluminoxane) was injected into the reactor by a syringe.

The reactor temperature was adjusted to 100°C. After the temperature was stabilized, 1 mg of diphenylmethylidene (cyclopentadienyl) (9-fluorenyl) zirconium dichloride was dissolved in 1 ml of toluene in a glove box. Then, 3 ml of MAO was added in the metallocene solution for activation. After five minutes of activation, the metallocene solution was then injected into the reactor to initiate polymerization and the mixture was stirred at a rate of 750 rpm. Finally, ethylene at a pressure of 15 kg/cm² was introduced into the reactor to a saturation level in the solution and the stir rate for the mixture was maintained at 750 rpm. The reaction proceeded for 30 minutes.

After the completion of the polymerization reaction, the reaction solution was poured into an acetone solution to precipitate the product. The product was washed with acetone two or three times, filtered, and dried in vacuum oven at 80°C for 12 hours. The obtained copolymer was 15.3 g. The results obtained are shown in Table 7.

**Table 7**

| Example | Metallocene Complex (mg) | MAO (ml) | Reaction Temperature (°C) | ethylene pressure (kg/cm²) | Yield (g) | Activity (g/gZr.hr) | Tg (°C) |
|---|---|---|---|---|---|---|---|
| J | 0.52 | 1.3 | 120 | 5 | 24.4 | 2.14×10⁵ | 245 |
| L | 1.00 | 7 | 120 | 5 | 15.3 | 9.37×10⁴ | 199 |

### Examples M to O

The same procedures as described in Example A were repeated to prepare various cycloolefin copolymers except that the reaction temperature was set to 120°C, ethylene pressure was changed, and the amounts of metallocene and MAO were changed. The metallocene used in Examples M to O was the same as that used in Example A. The results obtained are shown in Table 8.

**Table 8**

| Example | Metallocene Complex (mg) | MAO (ml) | Reaction Temperature (°C) | ethylene pressure (kg/cm²) | Yield (g) | Activity (g/gZr.hr) | Tg (°C) |
|---|---|---|---|---|---|---|---|
| M | 0.22 | 1.3 | 120 | 15 | 20.4 | 8.23×10⁵ | 185 |
| N | 0.49 | 3.4 | 120 | 30 | 59.0 | 10.9×10⁵ | 147 |
| O | 0.47 | 3.4 | 120 | 60 | 52.5 | 10.0×10⁵ | 105 |

### Examples P to S

The same procedures as described in Example A were repeated to prepare various cycloolefin copolymers except that the reaction temperature, ethylene pressure, and the amounts of metallocene and MAO were changed. The metallocene used in Examples P to S was the same as that used in Example A. The norbornene used had difference concentrations in these examples. The results obtained are shown in Table 9.

**Table 9**

| Example | Metallocene Complex (mg) | MAO (ml) | norbornene concentration (%) | Reaction Temperature (°C) | ethylene pressure (kg/cm²) | Yield (g) | Activity (g/gZr.hr) | TG (°C) |
|---|---|---|---|---|---|---|---|---|
| P | 0.23 | 1.3 | 85 | 120 | 15 | 28.5 | 5.50×10⁵ | 183 |
| Q | 0.22 | 1.3 | 50 | 120 | 15 | 30.8 | 12.4×10⁵ | 156 |
| R | 0.46 | 5.2 | 85 | 100 | 60 | 70.6 | 1.36×10⁵ | 103 |
| S | 0.47 | 5.2 | 50 | 100 | 60 | 33.0 | 6.30×10⁵ | 66 |

### Reference Example T

The same procedures as described in Example A were employed, except that the metallocene compound used was changed to that prepared from Reference Example 5, the reaction temperature was 120°C, the reaction time was 10 minutes, and Al/Zr in mole was 3000. The results are shown in Table 10.

### Comparative Example U

The same procedures as described in Example T were employed, except that the metallocene compound used was changed to those used in U.S. patent 5,559,199 (dimethyl silyl-(1-indenyl)-cyclopentadienyl zirconium dichloride and U.S. patent 5,602,219 (isopropenylidene cyclopentadienyl fluorenyl) zirconium dichloride. The results are shown in Table 10.

**Table 10**

| Catalysts | Ethylene pressure (kg/cm²) | Reaction time (min) | Yield (g) | Tg(°C) | Activity g/g Zr·hr | Norbornene Conversion (%) |
|---|---|---|---|---|---|---|
| USP 5,559,199 | 15 | 10 | 4.8 | 89.66 | 3.9 E+05 | 5.1 |
| USP 5,602,219 | 15 | 10 | 23.6 | 159.96 | 1.92 E+06 | 25.40 |
| Catalyst prepared in Example 5 | 15 | 10 | 32.0 | 186.15 | 2.59 E+06 | 36.29 |

It can be seen from Table 10 that compared with the conventional catalyst systems, using the catalyst composition of the present invention, the obtained cycloolefin copolymer has an increased norbornene conversion and a substantially increased glass transition temperature (Tg), still maintaining high catalytic activity.

## Claims (Claims for the following Contracting State(s): DE, FR, GB, NL)

1. A catalyst composition for preparing an olefin polymer, comprising: 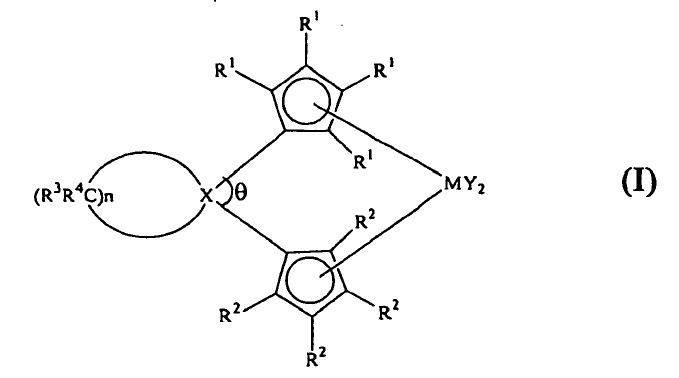
(a) a metallocene compound represented by the formula (I);
wherein
R¹ can be the same or different and is hydrogen, halogen, an alkyl, alkenyl, aryl, alkylaryl or arylalkyl group having from 1 to 20 carbon atoms, or two adjacent R¹ groups can link together with the carbon atoms to which they are attached to form an indenyl or tetrahydroindenyl group;
R² can be the same or different and has the same definition as R¹;
X is carbon, germanium or tin;
n is 2 or 3;
R³ and R⁴ can be the same or different and are hydrogen, halogen, an alkyl, alkenyl, aryl, alkylaryl or arylalkyl group having from 1 to 12 carbon atoms;
M is a Group IVB transition metal with an oxidation state of +4;
Y is the same or different and is independently an anionic ligand with a -1 valence; and
the angle θ formed by the two cyclopentadienyl rings and X is equal to or greater than 100 degrees;
(b) an activating cocatalyst of (1) an aluminoxane, (2) a mixture of AlR¹¹R¹²R¹³ and a borate, or (3) a mixture of AlR¹¹R¹²R¹³ and an aluminoxane, wherein R¹¹, R¹², and R¹³ are a C₁₋₂₀ aliphatic group or a C₆₋₁₀ aromatic group;
with the proviso that the metallocene compound is not selected from:
cyclobutylidene(1-η⁵-methylcyclopentadienyl) (1-η⁵-indenyl)bis(dimethylamino) zirconium;
cyclobutylidene(1-η⁵-cyclopentadienyl) (1-η⁵-indenyl)bis(dimethylamino)zirconium;
nor a metallocene compound of the formula: 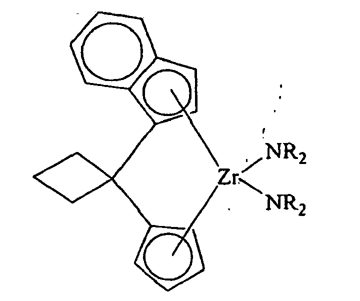 wherein R is a C1-C20 hydrocarbyl group, or 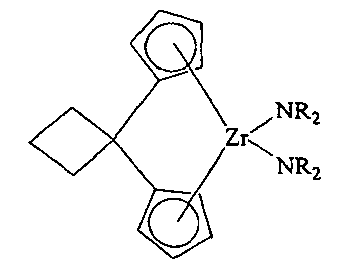 wherein R is a C1-C20 hydrocarbyl group.

2. The catalyst composition as claimed in claim 1, wherein each of R¹ and R² is H, C₁₋₁₀ alkyl, C₁₋₁₀ alkenyl, C₆₋₁₀ aryl, C₇₋₁₀ alkylaryl, or C₇₋₁₀ arylalkyl.

3. The catalyst composition as claimed in claim 2, wherein each of R¹ and R² is H, methyl, ethyl, propyl, butyl, isobutyl, amyl, isoamyl, hexyl, 2-ethylhexyl, heptyl, octyl, vinyl, allyl, isopropenyl, phenyl, or tolyl.

4. The catalyst composition as claimed in claim 1, wherein X is carbon.

5. The catalyst composition as claimed in claim 1, wherein Y is H, a C₁₋₂₀ hydrocarbon group, a halogen, a C₆₋₂₀ aryl group, a C₇₋₂₀ arylalkyl group or alkylaryl group, a C₁₋₂₀ alkoxy group, a C₁₋₂₀ aryloxy group, -NH₂, -NHR⁷,-NR⁷R⁸, -(C=O)NH₂, -(C=O)NHR⁹, or -(C=O)NR⁹R¹⁰, and each of R⁷, R⁸, R⁹ and R¹⁰ is a C₁₋₂₀ hydrocarbyl group.

6. The catalyst composition as in claim 1, wherein Y is a halogen or -N(CH₃)₂.

7. A process for preparing an olefin polymer, comprising the step of:
polymerizing (a) an olefin, or (b) at least one olefin with at least one other monomer,
under polymerizing conditions in the presence of a catalytically effective amount of the catalyst composition as claimed in claim 1.

8. The process as claimed in claim 7, wherein the process comprises polymerizing (a) an olefin, and the olefin is a cycloolefin.

9. The process as claimed in claim 7, wherein the process comprises polymerizing (b) at least one olefin with at least one other monomer, and wherein the olefin is a cycloolefin and the other monomer is an acyclic olefin.

10. The process as claimed in claim 9, wherein the cycloolefin is a bicycloheptene, a tricyclodecene, a tricycloundecene, a tetracyclododecene, a pentacyclopentadecene, a pentacyclopentadecadiene, a pentacyclohexadecene, a hexacycloheptadecene, a heptacycloeicosene, a heptacycloheneicosene, a octacyclodocosene, a nonacyclopentacosene, or a nonacyclohexacosene.

11. The process as claimed in claim 9, wherein the acyclic olefin is ethylene or an α-olefin having 3 to 12 carbon atoms.

12. The process as claimed in claim 11, wherein the α-olefin is propylene, 1-butene, 1-pentene, 1-hexene, or 1-octene.

13. The process as claimed in claim 9, wherein the process comprises polymerizing (b) a cycloolefin with an acyclic olefin, and wherein the cycloolefin is norbornene and the acyclic olefin is ethylene.

14. The process as claimed in claim 9, wherein the olefin polymer resulted has a glass transition temperature ranging from 60°C-350°C.

15. The process as claimed in claim 9, wherein the olefin polymer results has a glass transition temperature ranging from 120°C-350°C.

16. The process as claimed in claim 9, wherein the olefin polymer results has a glass transition temperature ranging from 250°C-350°C.

## Claims (Claims for the following Contracting State(s): IT)

1. A catalyst composition for preparing an olefin polymer, comprising:
(a) a metallocene compound represented by the formula (I); 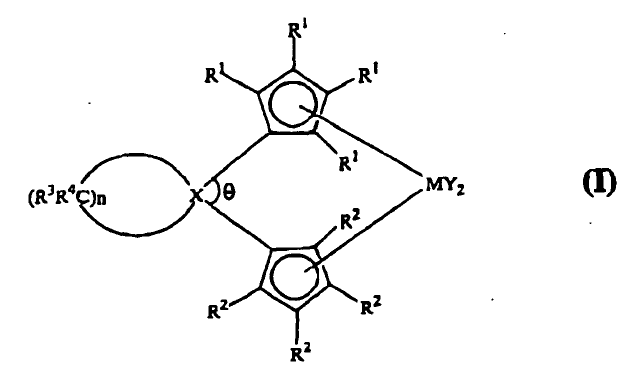 wherein
R¹ can be the same or different and is hydrogen, halogen, an alkyl, alkenyl, aryl, alkylaryl or arylalkyl group having from 1 to 20 carbon atoms, or two adjacent R¹ groups can link together with the carbon atoms to which they are attached to form an indenyl or tetrahydroindenyl group;
R² can be the same or different and has the same definition as R¹;
X is carbon, germanium or tin;
n is 2 or 3 ;
R³ and R⁴ can be the same or different and are hydrogen, halogen, an alkyl, alkenyl, aryl, alkylaryl or arylalkyl group having from 1 to 12 carbon atoms;
M is a Group IVB transition metal with an oxidation state of +4;
Y is the same or different and is independently an anionic ligand with a -1 valence; and
the angle θ formed by the two cyclopentadienyl rings and X is equal to or greater than 100 degrees;
(b) an activating cocatalyst of (1) an aluminoxane, (2) a mixture of AlR¹¹R¹²R¹³ and a borate, or (3) a mixture of AlR¹¹R¹²R¹³ and an aluminoxane, wherein R¹¹, R¹², and R¹³ are a C₁₋₂₀ aliphatic group or a C₅₋₁₀ aromatic group.

2. The catalyst composition as claimed in claim 1, wherein each of R¹ and R² is H, C₁₋₁₀ alkyl, C₁₋₁₀ alkenyl, C₆₋₁₀ aryl, C₇₋₁₀ alkylaryl, or C₇₋₁₀ arylalkyl.

3. The catalyst composition as claimed in claim 2, wherein each of R¹ and R² is H, methyl, ethyl, propyl, butyl, isobutyl, amyl, isoamyl, hexyl, 2-ethylhexyl, heptyl, octyl, vinyl, allyl, isopropenyl, phenyl, or tolyl.

4. The catalyst composition as claimed in claim 1, wherein X is carbon.

5. The catalyst composition as claimed in claim 1, wherein Y is H, a C₁₋₂₀ hydrocarbon group, a halogen, a C₅₋₂₀ aryl group, a C₇₋₂₀ arylalkyl group or alkylaryl group, a C₁₋₂₀ alkoxy group, a C₁₋₂₀ aryloxy group, -NH₂, -NHR⁷,-NR⁷R⁸, - (C=O)NH₂, -(C=O)NHR⁹, or -(C=O)NR⁹R¹⁰, and each of R⁷, R⁸, R and R¹⁰ is a C₁₋₂₀ hydrocarbyl group.

6. The catalyst composition as in claim 1, wherein Y is a halogen or -N(CH₃)₂.

7. A process for preparing an olefin polymer, comprising the step of:
polymerizing (a) an olefin, or (b) at least one olefin with at least one other monomer,
under polymerizing conditions in the presence of a catalytically effective amount of the catalyst composition as claimed in claim 1.

8. The process as claimed in claim 7, wherein the process comprises polymerizing (a) an olefin, and the olefin is a cycloolefin.

9. The process as claimed in claim 7, wherein the process comprises polymerizing (b) at least one olefin with at least one other monomer, and wherein the olefin is a cycloolefin and the other monomer is an acyclic olefin.

10. The process as claimed in claim 9, wherein the cycloolefin is a bicycloheptene, a tricyclodecene, a tricycloundecens, a tetracyclododecene, a pentacyclopentadecene, a pentacyclopentadecadiene, a pentacyclohexadecene, a hexacycloheptadecene, a heptacycloeicosene, a heptacycloheneicosene, a octacyclodocosene, a nonacyclopentacosene, or a nonacyclohexacosene.

11. The process as claimed in claim 9, wherein the acyclic olefin is ethylene or an α-olefin having 3 to 12 carbon atoms.

12. The process as claimed in claim 11, wherein the α-olefin is propylene, 1-butene, 1-pentene, 1-hexene, or 1-octene.

13. The process as claimed in claim 9, wherein the process comprises polymerizing (b) a cycloolefin with an acyclic olefin, and wherein the cycloolefin is norbornene and the acyclic olefin is ethylene.

14. The process as claimed in claim 9, wherein the olefin polymer resulted has a glass transition temperature ranging from 60°C-350°C.

15. The process as claimed in claim 9, wherein the olefin polymer results has a glass transition temperature ranging from 120°C-350°C.

16. The process as claimed in claim 9, wherein the olefin polymer results has a glass transition temperature ranging from 250°C-350°C.

17. The catalyst composition as claimed in claim 1, wherein the metallocene compound of formula (I) has the structure 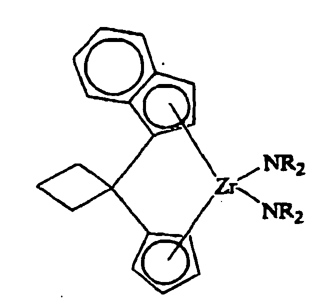 wherein R is a C₁-C₂₀ hydrocarbyl group.

18. The catalyst composition as claimed in claim 1, wherein the metallocene compound of formula (I) has the structure 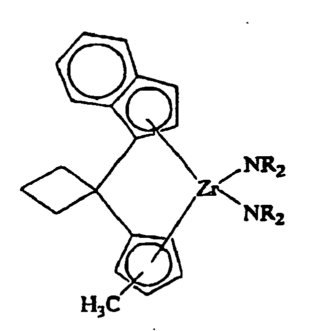 wherein R is a C₁-C₂₀ hydrocarbyl group.

19. The catalyst composition as claimed in claim 1, wherein the metallocene compound of formula (I) has the structure 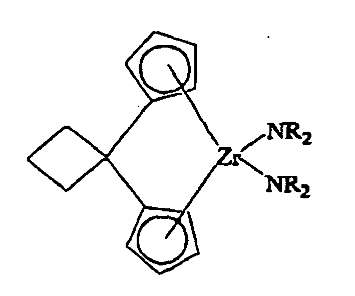 wherein R is a C₁-C₂₀ hydrocarbyl group.

## Patentansprüche (Patentansprüche für folgende(n) Vertragsstaat(en): DE, FR, GB, NL)

1. Katalysatorzusammensetzung zur Herstellung eines Olefinpolymers, umfassend 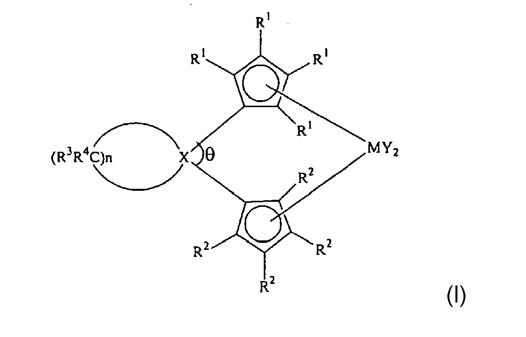
(a) eine Metallocen-Verbindung nach Formel (I);
worin
R¹ gleich oder unterschiedlich sein kann und zwar Wasserstoff, Halogen, eine Alkyl-, Alkenyl-, Aryl-, Alkylaryl- oder Arylalkyl-Gruppe mit zwischen 1 und 20 Kohlenstoffatomen, oder worin zwei nebeneinander liegende R¹-Gruppen sich zusammenschließen können mit den Kohlenstoffatomen, an die sie gebunden sind, so dass eine Indenyl- oder Tetrahydroindenyl-Gruppe gebildet wird;
R² gleich oder unterschiedlich sein kann und die selbe Definition hat wie R¹;
X Kohlenstoff, Germanium oder Zinn ist;
n 2 oder 3 ist;
R³ und R⁴ gleich oder unterschiedlich sein können und zwar Wasserstoff, Halogen, eine Alkyl-, Alkenyl-, Aryl-, Alkylaryl- oder Arylalkyl-Gruppe mit zwischen 1 und 12 Kohlenstoffatomen;
M ein Übergangsmetall aus der Gruppe IVB mit einem Oxidationszustand von +4 ist;
Y gleich oder unterschiedlich ist und unabhängig ein anionischer Ligand mit einer Wertigkeit von -1; und
der Winkel θ, der durch die beiden Cyclopentadienyl-Ringe und X gebildet wird, gleich oder größer als 100 Grad ist;
(b) einen aktivierenden Co-Katalysator von (1) einem Aluminoxan, (2) einer Mischung aus AIR¹¹R¹²R¹³ und einem Borat, oder (3) einer Mischung aus AIR¹¹R¹²R¹³ und einem Aluminoxan, worin R¹¹, R¹² und R¹³ eine C₁₋₂₀-aliphatische Gruppe oder eine C₆₋₁₀-aromatische Gruppe sind;
mit der Einschränkung, dass die Metallocen-Verbindung nicht ausgewählt ist aus
Cyclobutyliden-(1-η⁵-methylcyclopentadienyl)-(1-η⁵-indenyl)bis(dimethylamino)-zirconium;
Cyclobutyliden-(1-η⁵-cyclopentadienyl)-(1-η⁵-indenyl)bis(dimethylamino)-zirconium;
und keine Metallocen-Verbindung der Formel 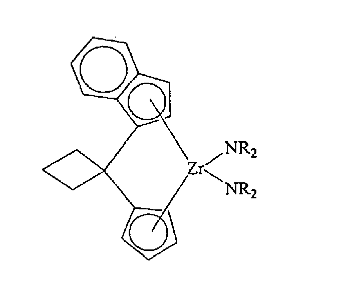 worin R eine C1-C20-Hydrocarbylgruppe ist, oder 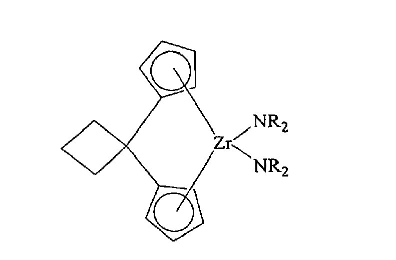 worin R eine C1-C20-Hydrocarbylgruppe ist.

2. Katalysatorzusammensetzung gemäß Anspruch 1, worin jedes aus R¹ und R² Wasserstoff, C₁₋₁₀-Alkyl, C₁₋₁₀-Alkenyl, C₆₋₁₀-Aryl, C₇₋₁₀-Alkylaryl oder C₇₋₁₀-Arylalkyl ist.

3. Katalysatorzusammensetzung gemäß Anspruch 2, worin jedes aus R¹ und R² Wasserstoff, Methyl, Ethyl, Propyl, Butyl, Isobutyl, Amyl, Isoamyl, Hexyl, 2-Ethylhexyl, Heptyl, Octyl, Vinyl, Allyl, Isopropenyl, Phenyl oder Tolyl ist.

4. Katalysatorzusammensetzung gemäß Anspruch 1, worin X Kohlenstoff ist.

5. Katalysatorzusammensetzung gemäß Anspruch 1, worin Y Wasserstoff, eine C₁₋₂₀-Kohlenwasserstoffgruppe, ein Halogen, eine C₆₋₂₀-Arylgruppe, eine C₇₋₂₀-Arylalkyl- oder -Alkylarylgruppe, eine C₁₋₂₀-Alkoxygruppe, eine C₁₋₂₀-Aryloxygruppe, -NH₂, -NHR⁷, -NR⁷R⁸, -(C=O)NH₂, -(C=O)NHR⁹, oder -(C=O)NR⁹R¹⁰ ist, und worin jedes aus R⁷, R⁸, R⁹ und R¹⁰ eine C₁₋₂₀-Hydrocarbylgruppe ist.

6. Katalysatorzusammensetzung gemäß Anspruch 1, worin Y ein Halogen oder -N(CH₃)₂ ist.

7. Herstellungsverfahren für ein Olefinpolymer, umfassend den Schritt
Polymerisierung (a) eines Olefins oder (b) mindestens eines Olefins mit mindestens einem weiteren Monomer,
unter Polymerisationsbedingungen in der Gegenwart einer katalytisch wirksamen Menge der Katalysatorzusammensetzung aus Anspruch 1.

8. Herstellungsverfahren gemäß Anspruch 7, worin das Verfahren umfasst Polymerisierung (a) eines Olefins, und worin das Olefin ein Cycloolefin ist.

9. Herstellungsverfahren gemäß Anspruch 7, worin das Verfahren umfasst Polymerisierung (b) mindestens eines Olefins mit mindestens einem weiteren Monomer, und worin das Olefin ein Cycloolefin ist und das weitere Monomer ein acyclisches Olefin.

10. Herstellungsverfahren gemäß Anspruch 9, worin das Cycloolefin ein Bicyclohepten, ein Tricyclodecen, ein Tricycloundecen, ein Tetracyclododecen, ein Pentacyclopentadecen, ein Pentacyclopentadecadien, ein Pentacyclohexadecen, ein Hexacycloheptadecen, ein Heptacycloeicosen, ein Heptacycloheneicosen, ein Octacyclodocosen, ein Nonacyclopentacosen, oder ein Nonacyclohexacosen ist.

11. Herstellungsverfahren gemäß Anspruch 9, worin das acyclische Olefin Ethylen oder ein α-Olefin mit 3 bis 12 Kohlenstoffatomen ist.

12. Herstellungsverfahren gemäß Anspruch 11, worin das α-Olefin Propylen, 1-Buten, 1-Penten, 1-Hexen oder 1-Octen ist.

13. Herstellungsverfahren gemäß Anspruch 9, worin das Verfahren umfasst Polymerisierung (b) eines Cycloolefins mit einem acyclischen Olefin, und worin das Cycloolefin Norbornen ist und das acyclische Olefin Ethylen.

14. Herstellungsverfahren gemäß Anspruch 9, worin das entstandene Olefinpolymer eine Glasübergangstemperatur zwischen 60°C und 350°C hat.

15. Herstellungsverfahren gemäß Anspruch 9, worin das entstandene Olefinpolymer eine Glasübergangstemperatur zwischen 120°C und 350°C hat.

16. Herstellungsverfahren gemäß Anspruch 9, worin das entstandene Olefinpolymer eine Glasübergangstemperatur zwischen 250°C und 350°C hat.

## Patentansprüche (Patentansprüche für folgende(n) Vertragsstaat(en): IT)

1. Katalysatorzusammensetzung zur Herstellung eines Olefinpolymers, umfassend
(a) eine Metallocen-Verbindung nach Formel (I); 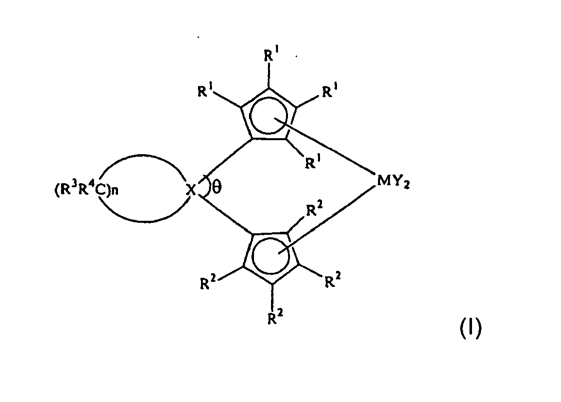 worin
R¹ gleich oder unterschiedlich sein kann und zwar Wasserstoff, Halogen, eine Alkyl-, Alkenyl-, Aryl-, Alkylaryl- oder Arylalkyl-Gruppe mit zwischen 1 und 20 Kohlenstoffatomen, oder worin zwei nebeneinander liegende R¹-Gruppen sich zusammenschließen können mit den Kohlenstoffatomen, an die sie gebunden sind, so dass eine Indenyl- oder Tetrahydroindenyl-Gruppe gebildet wird;
R² gleich oder unterschiedlich sein kann und die selbe Definition hat wie R¹;
X Kohlenstoff, Germanium oder Zinn ist;
n 2 oder 3 ist;
R³ und R⁴ gleich oder unterschiedlich sein können und zwar Wasserstoff, Halogen, eine Alkyl-, Alkenyl-, Aryl-, Alkylaryl- oder Arylalkyl-Gruppe mit zwischen 1 und 12 Kohlenstoffatomen;
M ein Übergangsmetall aus der Gruppe IVB mit einem Oxidationszustand von +4 ist;
Y gleich oder unterschiedlich ist und unabhängig ein anionischer Ligand mit einer Wertigkeit von -1; und
der Winkel 6, der durch die beiden Cyclopentadienyl-Ringe und X gebildet wird, gleich oder größer als 100 Grad ist;
(b) einen aktivierenden Co-Katalysator von (1) einem Aluminoxan, (2) einer Mischung aus AIR¹¹R¹²R¹³ und einem Borat, oder (3) einer Mischung aus AIR¹¹R¹²R¹³ und einem Aluminoxan, worin R¹¹, R¹² und R¹³ eine C₁₋₂₀-aliphatische Gruppe oder eine C₆₋₁₀-aromatische Gruppe sind.

2. Katalysatorzusammensetzung gemäß Anspruch 1, worin jedes aus R¹ und R² Wasserstoff, C₁₋₁₀-Alkyl, C₁₋₁₀-Alkenyl, C₆₋₁₀-Aryl, C₇₋₁₀-Alkylaryl oder C₇₋₁₀-Arylalkyl ist.

3. Katalysatorzusammensetzung gemäß Anspruch 2, worin jedes aus R¹ und R² Wasserstoff, Methyl, Ethyl, Propyl, Butyl, Isobutyl, Amyl, Isoamyl, Hexyl, 2-Ethylhexyl, Heptyl, Octyl, Vinyl, Allyl, Isopropenyl, Phenyl oder Tolyl ist.

4. Katalysatorzusammensetzung gemäß Anspruch 1, worin X Kohlenstoff ist.

5. Katalysatorzusammensetzung gemäß Anspruch 1, worin Y Wasserstoff, eine C₁₋₂₀-Kohlenwasserstoffgruppe, ein Halogen, eine C₆₋₂₀-Arylgruppe, eine C₇₋₂₀-Arylalkyl- oder -Alkylarylgruppe, eine C₁₋₂₀-Alkoxygruppe, eine C₁₋₂₀-Aryloxygruppe, -NH₂, -NHR⁷, -NR⁷R⁸, -(C=O)NH₂, -(C=O)NHR⁹, oder -(C=O)NR⁹R¹⁰ ist, und worin jedes aus R⁷, R⁸, R⁹ und R¹⁰ eine C₁₋₂₀-Hydrocarbylgruppe ist.

6. Katalysatorzusammensetzung gemäß Anspruch 1, worin Y ein Halogen oder -N(CH₃)₂ ist.

7. Herstellungsverfahren für ein Olefinpolymer, umfassend den Schritt Polymerisierung (a) eines Olefins oder (b) mindestens eines Olefins mit mindestens einem weiteren Monomer,
unter Polymerisationsbedingungen in der Gegenwart einer katalytisch wirksamen Menge der Katalysatorzusammensetzung aus Anspruch 1.

8. Herstellungsverfahren gemäß Anspruch 7, worin das Verfahren umfasst Polymerisierung (a) eines Olefine, und worin das Olefin ein Cycloolefin ist.

9. Herstellungsverfahren gemäß Anspruch 7, worin das Verfahren umfasst Polymerisierung (b) mindestens eines Olefins mit mindestens einem weiteren Monomer, und worin das Olefin ein Cycloolefin ist und das weitere Monomer ein acyclisches Olefin.

10. Herstellungsverfahren gemäß Anspruch 9, worin das Cycloolefin ein Bicyclohepten, ein Tricyclodecen, ein Tricycloundecen, ein Tetracyclododecen, ein Pentacyclopentadecen, ein Pentacyclopentadecadien, ein Pentacyclohexadecen, ein Hexacycloheptadecen, ein Heptacycloeicosen, ein Heptacycloheneicosen, ein Octacyclodocosen, ein Nonacyclopentacosen, oder ein Nonacyclohexacosen ist.

11. Herstellungsverfahren gemäß Anspruch 9, worin das acyclische Olefin Ethylen oder ein α-Olefin mit 3 bis 12 Kohlenstoffatomen ist.

12. Herstellungsverfahren gemäß Anspruch 11, worin das α-Olefin Propylen, 1-Buten, 1-Penten, 1-Hexen oder 1-Octen ist.

13. Herstellungsverfahren gemäß Anspruch 9, worin das Verfahren umfasst Polymerisierung (b) eines Cycloolefins mit einem acyclischen Olefin, und worin das Cycloolefin Norbornen ist und das acyclische Olefin Ethylen.

14. Herstellungsverfahren gemäß Anspruch 9, worin das entstandene Olefinpolymer eine Glasübergangstemperatur zwischen 60°C und 350°C hat.

15. Herstellungsverfahren gemäß Anspruch 9, worin das entstandene Olefinpolymer eine Glasübergangstemperatur zwischen 120°C und 350°C hat.

16. Herstellungsverfahren gemäß Anspruch 9, worin das entstandene Olefinpolymer eine Glasübergangstemperatur zwischen 250°C und 350°C hat.

17. Katalysatorzusammensetzung gemäß Anspruch 1, worin die Metallocen-Verbindung gemäß Formel (I) die Struktur 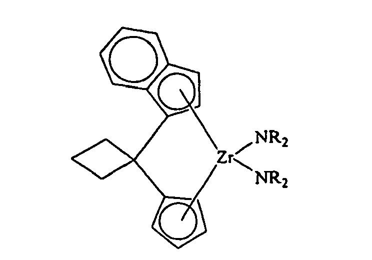 hat, worin R eine C₁-C₂₀-Hydrocarbylgruppe ist.

18. Katalysatorzusammensetzung gemäß Anspruch 1, worin die Metallocen-Verbindung gemäß Formel (I) die Struktur 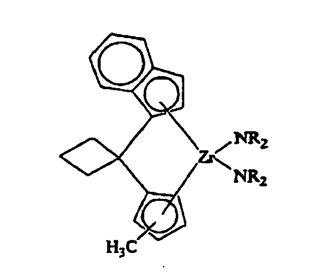 hat, worin R eine C₁-C₂₀-Hydrocarbylgruppe ist.

19. Katalysatorzusammensetzung gemäß Anspruch 1, worin die Metallocen-Verbindung gemäß Formel (I) die Struktur 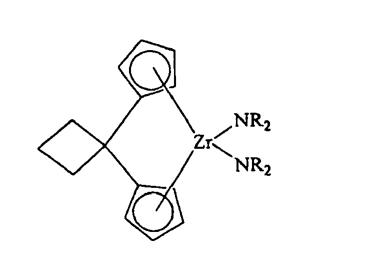 hat, worin R eine C₁-C₂₀-Hydrocarbylgruppe ist.

## Revendications (Revendications pour l'(les) Etat(s) contractant(s) suivant(s): DE, FR, GB, NL)

1. Composition catalytique pour préparer un polymère oléfinique, comprenant 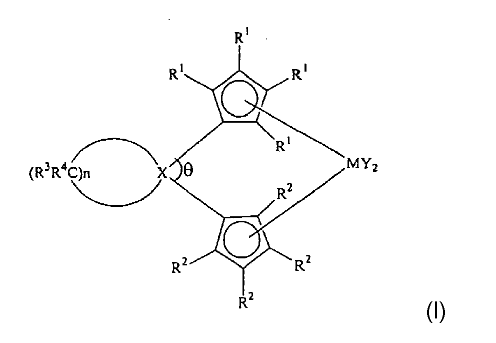
(a) un composé métallocène représenté par la formule (I) ;
dans lequel
R¹ peut être le même ou différent et est hydrogène, halogénure, un groupe alkyle, alkényle, aryle, alkylaryle ou arylalkyle ayant entre 1 et 20 atomes de carbone, ou deux R¹ adjacents peuvent se connecter ensemble avec les atomes de carbone auxquels ils sont attachés pour former un groupe indényle ou tétra-hydroindényle ;
R² peut être le même ou différent et a la même définition que R¹ ;
X est carbone, germanium ou étain ;
n est 2 ou 3 ;
R³ et R⁴ peuvent être les mêmes ou différents et sont hydrogène, halogénure, un groupe alkyle, alkényle, aryle, alkylaryle ou arylalkyle ayant entre 1 et 12 atomes de carbone ;
M est un métal de transition du groupe IVB dans un état d'oxydation de +4 ;
Y est le même ou différent et est indépendamment un ligand anionique avec une valence de -1 ; et
l'angle θ formé par les deux anneaux cyclopentadiényle et X est supérieur ou égal à 100 degrés ;
(b) un co-catalyseur activant de (1) une aluminoxane, (2) un mélange de AIR¹¹R¹²R¹³ avec un borate, ou (3) un mélange de AIR¹¹R¹²R¹³ avec une aluminoxane, dans lequel R¹¹, R¹² et R¹³ sont un groupe alyphatique C₁₋₂₀ ou un groupe aromatique C₆₋₁₀;
avec la condition que le composé métallocène n'est pas choisi parmi
le cyclobutylidène (1-η⁵-méthylecyclopentadiényle)-(1-η⁵-indényle) bis(diméthylamine) de zirconium;
le cyclobutylidène (1-η⁵-cyclopentadiényle)-(1-η⁵-indényle) bis(diméthylamine) de zirconium;
ni un composé métallocène représenté par la formule 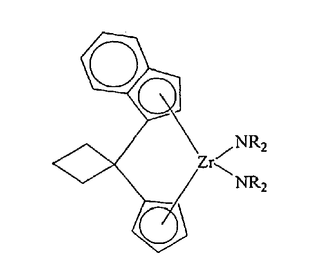 dans laquelle R représente un groupe hydrocarbyle C1-C20, ou 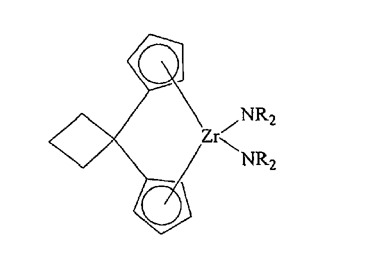 dans laquelle R représente un groupe hydrocarbyle C1-C20.

2. Composition catalytique selon la revendication 1, dans laquelle chacun de R¹ et R² représente hydrogène, C₁₋₁₀ alkyle, C₁₋₁₀ alkényle, C₆₋₁₀ aryle, C₇₋₁₀ alkylaryle, ou C₇₋₁₀ arylalkyle.

3. Composition catalytique selon la revendication 2, dans laquelle chacun de R¹ et R² représente hydrogène, méthyle, éthyle, propyle, butyle, isobutyle, amyle, isoamyle, hexyle, 2-éthylhexyle, heptyle, octyle, vinyle, allyle, isopropényle, phényle, ou tolyle.

4. Composition catalytique selon la revendication 1, dans laquelle X représente le carbone.

5. Composition catalytique selon la revendication 1, dans laquelle Y représente l'hydrogène, un groupe hydrocarbure C₁₋₂₀, un halogénure, un groupe aryle C₆₋₂₀, un groupe arylalkyle ou un groupe alkylaryle C₇₋₂₀, un groupe alkoxy C₁₋₂₀, un groupe aryloxy C₁₋₂₀, -NH₂, -NHR⁷, -NR⁷R⁸, -(C=O)NH₂, -(C=O)NHR⁹, ou -(C=O)NR⁹R¹⁰, et dans laquelle chacun parmi R⁷, R³, R⁹ et R¹⁰ est un groupe hydrocarbyle C₁₋₂₀.

6. Composition catalytique selon la revendication 1, dans laquelle Y représente un halogénure ou -N(CH₃)₂.

7. Procédé pour préparer un polymère oléfinique comprenant l'étape de :
polymériser (a) une oléfine, ou (b) au moins une oléfine avec au moins un monomère en plus,
dans des conditions polymérisantes en présence d'une quantité catalytiquement active de la composition catalytique de la revendication 1.

8. Procédé selon la revendication 7, dans lequel le procédé comprend polymériser (a) une oléfine et l'oléfine est une cyclooléfine.

9. Procédé selon la revendication 7, dans lequel le procédé comprend polymériser (b) au moins une oléfine avec au moins un monomère en plus, et dans lequel l'oléfine est une cyclooléfine et le monomère en plus est une oléfine acyclique.

10. Procédé selon la revendication 9, dans lequel la cyclooléfine est un bicycloheptène, un tricyclodécène, un tricycloundécène, un tétracyclododécène, un pentacyclopentadécène, un pentacyclopentadécadiène, un pentacyclohexadécène, un hexacycloheptadécène, un heptacycloeicosène, un heptacycloheneicosène, un octacyclodocosène, un nonacyclopentacosène, ou un nonacyclohexacosène.

11. Procédé selon la revendication 9, dans lequel l'oléfine acyclique est l'éthylène ou une α-oléfine ayant entre 3 et 12 atomes de carbone.

12. Procédé selon la revendication 11, dans lequel l'α-oléfine est le propylène, le but-1-ène, le pent-1-ène, le hex-1-ène, ou le oct-1-ène.

13. Procédé selon la revendication 9, dans lequel le procédé comprend polymériser (b) une cyclooléfine avec une oléfine acyclique, et dans lequel la cyclooléfine est le norbornène et l'oléfine acyclique est l'éthylène.

14. Procédé selon la revendication 9, dans lequel le polymère oléfinique obtenu a une température de transition vitreuse entre 60°C et 350°C.

15. Procédé selon la revendication 9, dans lequel le polymère oléfinique obtenu a une température de transition vitreuse entre 120°C et 350°C.

16. Procédé selon la revendication 9, dans lequel le polymère oléfinique obtenu a une température de transition vitreuse entre 250°C et 350°C.

## Revendications (Revendications pour l'(les) Etat(s) contractant(s) suivant(s): IT)

1. Composition catalytique pour préparer un polymère oléfinique, comprenant
(a) un composé métallocène représenté par la formule (I) ; 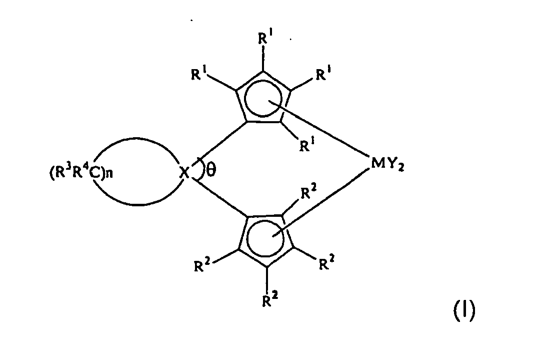 dans lequel
R¹ peut être le même ou différent et est hydrogène, halogénure, un groupe alkyle, alkényle, aryle, alkylaryle ou arylalkyle ayant entre 1 et 20 atomes de carbone, ou deux R¹ adjacents peuvent se connecter ensemble avec les atomes de carbone auxquels ils sont attachés pour former un groupe indényle ou tétra-hydroindényle ;
R² peut être le même ou différent et a la même définition que R¹ ;
X est carbone, germanium ou étain ;
n est 2 ou 3 ;
R³ et R⁴ peuvent être les mêmes ou différents et sont hydrogène, halogénure, un groupe alkyle, alkényle, aryle, alkylaryle ou arylalkyle ayant entre 1 et 12 atomes de carbone ;
M est un métal de transition du groupe IVB dans un état d'oxydation de +4 ;
Y est le même ou différent et est indépendamment un ligand anionique avec une valence de -1 ; et
l'angle θ formé par les deux anneaux cyclopentadiényle et X est supérieur ou égal à 100 degrés ;
(b) un co-catalyseur activant de (1) une aluminoxane, (2) un mélange de AIR¹¹R¹²R¹³ avec un borate, ou (3) un mélange de AIR¹¹R¹²R¹³ avec une aluminoxane, dans lequel R¹¹, R¹² et R¹³ sont un groupe alyphatique C₁₋₂₀ ou un groupe aromatique C₆₋₁₀.

2. Composition catalytique selon la revendication 1, dans laquelle chacun de R¹ et R² représente hydrogène, C₁₋₁₀ alkyle, C₁₋₁₀ alkényle, C₆₋₁₀ aryle, C₇₋₁₀ alkylaryle, ou C₇₋₁₀ arylalkyle.

3. Composition catalytique selon la revendication 2, dans laquelle chacun de R¹ et R² représente hydrogène, méthyle, éthyle, propyle, butyle, isobutyle, amyle, isoamyle, hexyle, 2-éthylhexyle, heptyle, octyle, vinyle, allyle, isopropényle, phényle, ou tolyle.

4. Composition catalytique selon la revendication 1, dans laquelle X représente le carbone.

5. Composition catalytique selon la revendication 1, dans laquelle Y représente l'hydrogène, un groupe hydrocarbure C₁₋₂₀, un halogénure, un groupe aryle C₆₋₂₀, un groupe arylalkyle ou un groupe alkylaryle C₇₋₂₀, un groupe alkoxy C₁₋₂₀, un groupe aryloxy C₁₋₂₀, -NH₂, -NHR⁷, -NR⁷R⁸, -(C=O)NH₂, -(C=O)NHR⁹, ou -(C=O)NR⁹R¹⁰, et dans laquelle chacun parmi R⁷, R⁸, R⁹ et R¹⁰ est un groupe hydrocarbyle C₁₋₂₀.

6. Composition catalytique selon la revendication 1, dans laquelle Y représente un halogénure ou -N(CH₃)₂.

7. Procédé pour préparer un polymère oléfinique comprenant l'étape de :
polymériser (a) une oléfine, ou (b) au moins une oléfine avec au moins un monomère en plus,
dans des conditions polymérisantes en présence d'une quantité catalytiquement active de la composition catalytique de la revendication 1.

8. Procédé selon la revendication 7, dans lequel le procédé comprend polymériser (a) une oléfine et l'oléfine est une cyclooléfine.

9. Procédé selon la revendication 7, dans lequel le procédé comprend polymériser (b) au moins une oléfine avec au moins un monomère en plus, et dans lequel l'oléfine est une cyclooléfine et le monomère en plus est une oléfine acyclique.

10. Procédé selon la revendication 9, dans lequel la cyclooléfine est un bicycloheptène, un tricyclodécène, un tricycloundécène, un tétracyclododécène, un pentacyclopentadécène, un pentacyclopentadécadiène, un pentacyclohexadécène, un hexacycloheptadécène, un heptacycloeicosène, un heptacycloheneicosène, un octacyclodocosène, un nonacyclopentacosène, ou un nonacyclohexacosène.

11. Procédé selon la revendication 9, dans lequel l'oléfine acyclique est l'éthylène ou une α-oléfine ayant entre 3 et 12 atomes de carbone.

12. Procédé selon la revendication 11, dans lequel l'α-oléfine est le propylène, le but-1-ène, le pent-1-ène, le hex-1-ène, ou le oct-1-ène.

13. Procédé selon la revendication 9, dans lequel le procédé comprend polymériser (b) une cyclooléfine avec une oléfine acyclique, et dans lequel la cyclooléfine est le norbornène et l'oléfine acyclique est l'éthylène.

14. Procédé selon la revendication 9, dans lequel le polymère oléfinique obtenu a une température de transition vitreuse entre 60°C et 350°C.

15. Procédé selon la revendication 9, dans lequel le polymère oléfinique obtenu a une température de transition vitreuse entre 120°C et 350°C.

16. Procédé selon la revendication 9, dans lequel le polymère oléfinique obtenu a une température de transition vitreuse entre 250°C et 350°C.

17. Composition catalytique selon la revendication 1, dans laquelle le composé métallocène répondant à la formule (I) a la structure 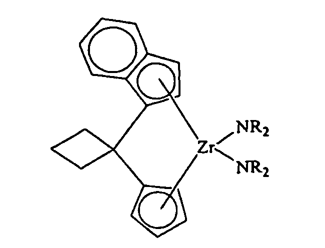 dans laquelle R représente un groupe hydrocarbyle C₁-C₂₀.

18. Composition catalytique selon la revendication 1, dans laquelle le composé métallocène répondant à la formule (I) a la structure 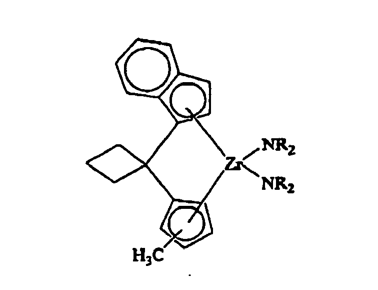 dans laquelle R représente un groupe hydrocarbyle C₁-C₂₀.

19. Composition catalytique selon la revendication 1, dans laquelle le composé métallocène répondant à la formule (I) a la structure 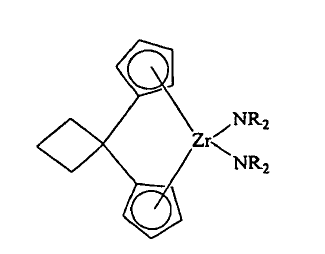 dans laquelle R représente un groupe hydrocarbyle C₁-C₂₀.
